# EUROPEAN PATENT SPECIFICATION

(11) **EP 0 730 376 B1**
(45) Date of publication and mention of the grant of the patent: **24.10.2001**
(21) Application number: 96107156.0
(22) Date of filing: 03.05.1991
(51) Int. Cl.: H04N 5/92, G11B 27/00

(54) **Method of coding motion picture data**
Verfahren zur Kodierung von Bewegtbilddaten
Procédé pour le codage de données d'images animées

(30) Priority: 09.05.1990 JP 11960490
(43) Date of publication of application: 04.09.1996
(62) Divisional of application: 91304052.3
(73) Proprietor: SONY CORPORATION, Tokyo 141 (JP)
(72) Inventor: Yonemitsu, Jun, c/o Patents Division, Shinagawa-ku, Tokyo 141 (JP)
(74) Representative: Robinson, Nigel Alexander Julian

(56) References cited:
- EP-A- 0 395 440
- DE-A- 3 437 182
- US-A- 4 717 956
- US-A- 4 969 039
- SIGNAL PROCESSING. IMAGE COMMUNICATION, vol. 1, no. 2, 1 October 1989, pages 225-238, XP000234870 EVCI C C ET AL: "LOW BIT RATE VIDEOPHONE CODEC FOR ISDN APPLICATIONS"
- IMAGE PROCESSING ALGORITHMS AND TECHNIQOES, SANTA CLARA, FEB. 12 - 14, 1990, vol. 1244, 12 February 1990, PENNINGTON K S;MOORHEAD R J, pages 305-311, XP000167600 GONZALES C A ET AL: "DCT BASED VIDEO COMPRESSION USING ARITHMETIC CODING"

## Description

This invention relates to methods of recording coded motion picture data. The invention is particularly, but not exclusively, applicable to cases where coded motion picture data which have been obtained by high efficiency coding of video signals are recorded in an editable form.

There has been previously proposed a recording/reproducing system in which video signals which represent a motion picture are high efficiency coded to form high density intraframe coded data and interframe coded data, are recorded on a compact disc, for example, a magneto-optical compact disc (CD-MO disc), and the recorded coded motion picture data are searched and reproduced when necessary (see Japanese patent publication 63/1183 and Japanese patent application 1/267049).

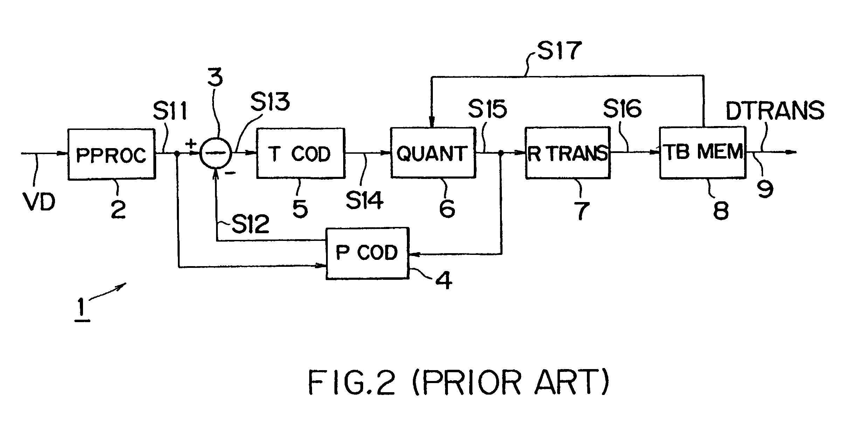

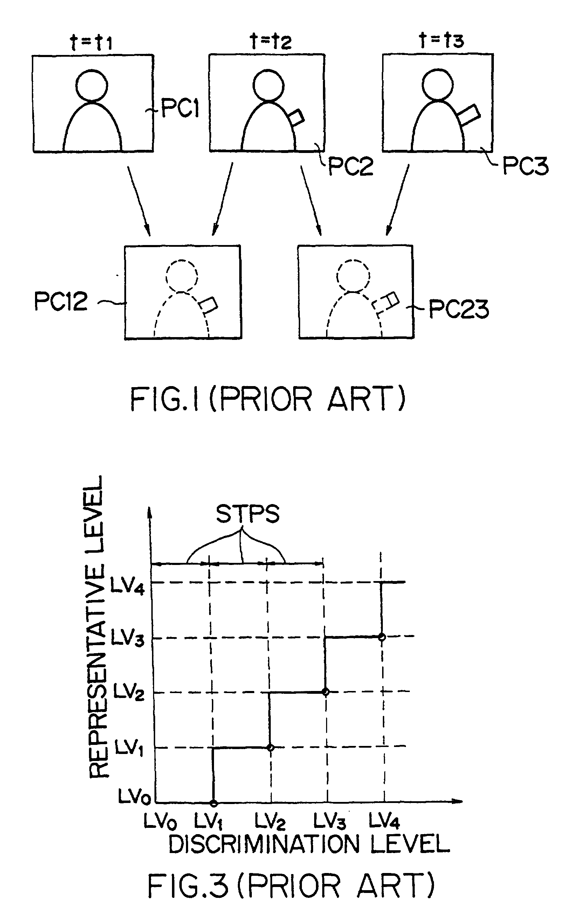

More specifically, for example, as shown in Figure 1, each of images PC1, PC2, PC3, .... which are motion pictures at respective times t = t1, t2, t3, .... is digitized and then supplied to a transmission system including, for example, a CD-MO recording/reproducing system. Processing is performed in such a manner as to enhance transmission efficiency by compressing image data to be transmitted, using the fact that video signals have substantial correlation in the time dimension. In the intraframe coding, compression such as to obtain differences by comparing pixel data with reference data is performed on the images PC1, PC2, PC3, ...., and for each of the images PC1, PC2, PC3, ...., image data are derived, the image data having been compressed using correlation between pixel data in the same frame.

On the other hand, in the interframe coding, image data PC12, PC23, .... which are differences of pixel data between adjacent images PC1 and PC2, PC2 and PC3, ...., respectively, are calculated, and are sent together with image data obtained by intraframe coding of the initial image PC1 at the time t = t1.

It is thus possible to code the images PC1, PC2, PC3, .... with high efficiency to provide digital data of an amount substantially less than where all the image data are sent, and then to transmit them to a CD-MO recording/reproducing system.

The encoding of such video signals is carried out in a coded motion picture data generating unit 1 having a configuration shown in Figure 2.

In the data generating unit 1, dropping of every other field, one field line thinning, and like processing are carried out by processing input video signals VD in a preprocessing circuit 2, and luminance signals and chrominance signals thereof are then converted to a transmission unit block (hereinafter referred to as a macro block) data S11, the macro block data S11 being data of 16 pixels (horizontal) x 16 pixels (vertical). The macro block data S11 is fed to an image data coding circuit 3.

The image data coding circuit 3 receives predictive current frame data S12 which is formed in a predictive coding circuit 4, and calculates the difference between those data and the macro block data S11 thereby to generate interframe coded data (this is referred to the interframe coding mode). This is fed to a transform coding circuit 5 as differential data S13. In the image data coding circuit 3, the difference between the macro block data S11 and the reference data is computed to produce intraframe coded data, which are also supplied as differential data S13 to the transform coding circuit 5.

The transform coding circuit 5 comprises a discrete cosine transform circuit, and performs high efficiency coding on the differential data S13 by orthogonal transformation to produce transform coding data S14. The transform coding data S14 are supplied to a quantization circuit 6, which thereby sends quantized image data S15.

The quantized image data S15 which have been thus obtained from the quantization circuit 6 undergo high efficiency coding again in a retransform coding circuit 7 which includes a variable length coding circuit, and is then supplied as transmission image data S16 to a transmission buffer memory 8.

In addition to this, the quantized image data S15 are subjected to inverse quantization and inverse transform coding in the predictive coding circuit 4, and are thereby decoded to the differential data. The predictive coding circuit 4 corrects the predictive previous frame data on the basis of the differential data, and thereby stores new predictive previous frame data. Furthermore, the predictive previous frame data which is stored in the predictive coding circuit 4 are motion compensated by motion detection data derived on the basis of the macro block data S11, thereby to produce predictive current frame data, which are fed to the image data coding circuit 3. Thus, the difference between the macro block data S11 of a frame to be currently transmitted and the predictive current frame data S12 is obtained as the differential data S13.

In a case where in the configuration of Figure 2, the motion picture previously described with reference to Figure 1 is transmitted, the image data of the image PC1 are firstly provided as the macro block data S11 at a time t1 (Figure 1). In this case, the image data coding circuit 3 is placed in the intraframe coding mode, in which these data are fed as the intraframe coded differential data S13 to the transform coding circuit 5, and thus the transmission image data S16 are supplied to the transmission buffer memory 8 via the quantization circuit 6 and the retransform coding circuit 7.

Concurrently, the quantized image data S15 which are obtained at the output terminal of the quantization circuit 6 undergo the predictive coding in the predictive coding circuit 4, and the predictive previous frame data which represent the transmission image data S16 supplied to the transmission buffer memory 8 are thereby held in the previous frame memory. When the macro block data S11 which represent the image PC2 at t = t2 are subsequently fed to the image data coding circuit 3, they are motion compensated by the predictive current frame data S12.

Thus, the image data coding circuit 3 supplies interframe coded differential data S13 to the transform coding circuit 5 at t = t2, and thereby differential data which represent a shift of the image between the frames are fed as transmission image data S16 to the transmission buffer memory 8. Concurrently, the predictive previous frame data are formed and stored in the predictive coding circuit 4 by supplying the quantized image data S15 to the predictive coding circuit 4.

Only differential data which represent the shift of the image between the previous frame and the current frame are sequentially sent to the transmission buffer memory 8 by repeating the same operations while the image data coding circuit 3 performs the interframe coding.

The transmission buffer memory 8 temporarily stores the transmission image data S16 thus supplied, and the transmission image data S16 are sequentially derived and sent as transmission data DTRANS via a transmission line 9 at a data transmission rate which depends on the transmission capacity of the transmission line 9.

At the same time, the transmission buffer memory 8 detects the amount of remaining data, and feeds back remaining amount data S17, which varies according to the amount of the remaining data, to the quantization circuit 6 to control the quantization step size according to the remaining amount data S17, so that an appropriate amount of the remaining data (which do not produce overflow or underflow) is kept in the transmission buffer memory 8 by adjusting the amount of data which are produced as the transmission image data S16.

More specifically, when the data remaining amount of the transmission buffer memory 8 reaches the upper allowable limit, the step size of the quantization step STPS (Figure 3) of the quantization circuit 6 is enlarged by the remaining amount data S17, so that coarser quantization is carried out in the quantization circuit 6, thereby to decrease the amount of data of the transmission image data S16.

On the contrary, in a case where the amount of the remaining data of the transmission buffer memory 8 decreases to the lower allowable limit, the remaining amount data S17 controls the step size of the quantization step STPS of the quantization circuit 6 to become smaller, and thereby the amount of data of the transmission image data S16 is increased by executing finer quantization in the quantization circuit 6.

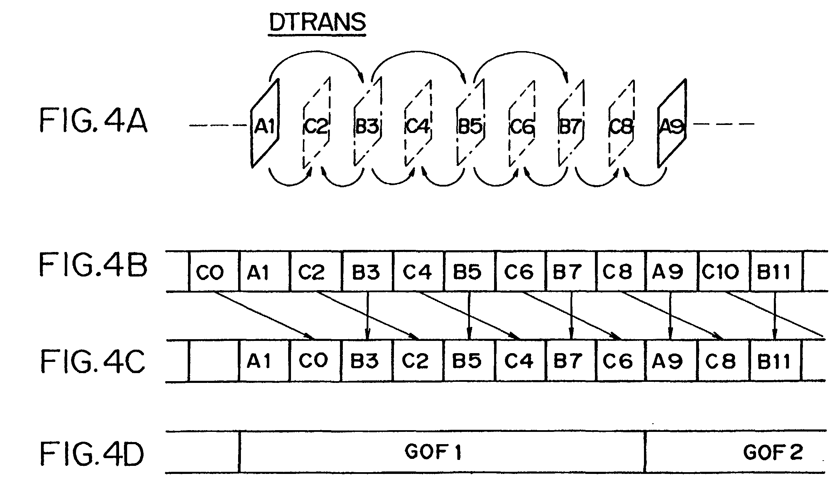

As transmission data DTRANS which are being sent from the coded motion picture data generating unit 1 with such a configuration, complete intraframe coded frames A1, A9, .... (hereinafter referred to as intraframes and indicated by the character "A"), interframe coded previous frame prediction coded frames B3, B5, B7, .... (hereinafter referred to as predictive frames and designated by the character "B"), and interpolated prediction coded frames C2, C4, C6, .... (hereinafter referred to as interpolated frames and indicated by the character "C") corresponding to these frames are transmitted in the order of input frames of the image data VD as shown in Figures 4A and 4B.

When such transmission data DTRANS are received, and the interpolated frame C2, for example, is decoded, the intraframe A1 and the predictive frame B3 are needed as shown in Figure 4C, and hence a memory and the control circuit thereof becomes necessary for the decoding system of the coded motion picture data, the memory being for delaying the interpolated frame C2 until the intraframe A1 and the predictive frame B3 are received. This makes the circuit configuration rather complicated and excessively increases the amount of delay.

For this reason, it has been considered that the transmission data DTRANS could be transmitted in the order necessary for the decoding operation as shown in Figure 4D. In such a case, the transmission data DTRANS is recorded so that groups of frames GOF1, GOF2 which include 8 frames (Al, C2, B3, C4, B5, C6, B7 and C8) between intraframes A1 and A9, .... use 20 sectors, for example, of the CD-MO disc.

However, in a case where an edit operation to edit and rewrite the group of frames GOF1, for example, is performed on the coded motion picture data recorded on a CD-MO disc in such an order of frames, and then the data are reproduced from the beginning, it is not possible to obtain video signals since the interpolated frame C8 in the group of frames GOF1 is interpolated on the basis of the new seventh predictive frame B7 in the group of the frames GOF1 and the old first intraframe A9 in the group of frames GOF2. As a result, there is a problem that the result of the edit is not correctly reproduced.

SPIE Vol. 1244, IMAGE PROCESSING ALGORITHMS AND TECHNIQUES, February 1990, SANTA CLARA, CA, US, pages 305-311, XP000167600 GONZALES ET AL. "DCT based video compression using arithmetic coding" describes a coding system using a group of frame (GOF) of size 15.

EP-A-395440, which is published after the priority date of the present application and thus forms state of the art according to Article 54(3) EPC, discloses an apparatus for adaptive interframe predictive encoding of video signals, wherein the apparatus determines for each block of a frame what sort of coding is the best to use. The choices of coding using both preceding and succeeding frames, only succeeding frame, only preceding frame or direct encoding.

DE-A-3437182 discloses the recording of digital video signals, wherein a frame sequence is encoded in such a way that an intraframe coded picture is recorded at the beginning of every sequence. This allows high speed searching of the recorded data.

US-A-4717956 discloses a motion compensated image-sequence compression technique in which the motion of an object point in a video screen occurring between the present frame and the following frame is predicted. The motion prediction technique involves the use of a corrected displacement estimate of the object point in the present frame as an offset from the present location of the object point to thereby calculate a motion trajectory for the object point.

Various aspects of the present invention are set out in the appended claim.

Thus, in editing coded motion picture data, recorded on a recording medium, for each group of frames the edit operation can be freely carried out by discriminating the groups of frames.

A predetermined number of frames intraframe coded or interframe coded can be made self-sufficient within the one group of frames, and thereby the editing is freely carried out with a simple construction.

The invention will now be described by way of example with reference to the accompanying drawings, throughout which like parts are referred to by like references, and in which:
Figure 1 is a diagrammatic view of intraframe/interframe coding;
Figure 2 is a block diagram showing a previously proposed coded motion picture data generating system;
Figure 3 is a characteristic graph showing quantization steps;
Figures 4A to 4D are diagrammatic views illustrating a previously proposed recording sequence of motion picture data;
Figures 5A, 5B and 6 are block diagrams illustrating a motion picture coding system and a motion picture decoding system which form a motion picture coding/decoding system to which the present invention is applied;
Figure 7 is a schematic diagram showing the form of frame image data;
Figures 8A and 8B are block diagrams illustrating a header data processing system of Figures 5A and 5B;
Figure 9 is a schematic diagram showing the form of flag data of Figures 8A and 8B;
Figure 10 is a block diagram showing an embodiment of motion picture data recording/reproducing system;
Figures 11A to 11E are schematic diagrams illustrating a format of recording/reproducing data;
Figures 12A to 12D are diagrammatic views showing a recording sequence of the coded motion picture data of the embodiment;
Figure 13 is a block diagram showing a frame sequence reordering circuit;
Figure 14 is a flow chart illustrating an edit routine;
Figure 15 is a diagrammatic view showing a recording region of a CD-MO disc;
Figure 16 is a block diagram showing a frame sequence reordering circuit;
Figure 17 is a block diagram showing a discontinuity detection circuit; and
Figures 18A to 18D and 19A to 19D are diagrammatic views illustrating another recording sequence of the coded motion picture data.

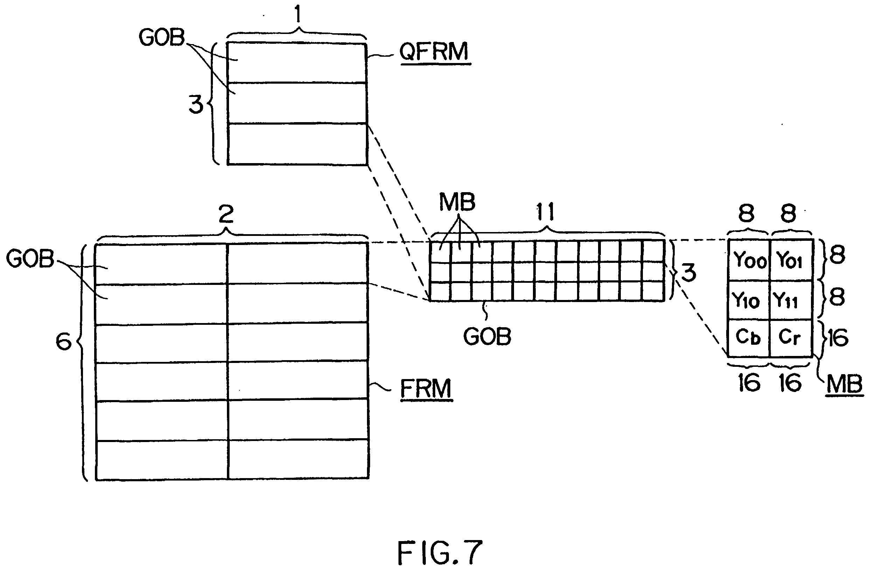

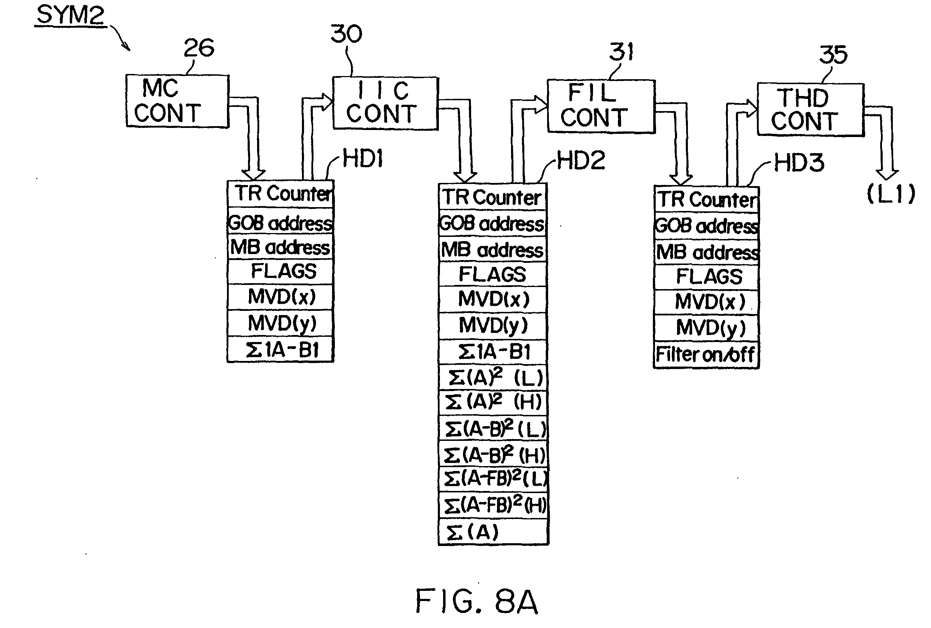

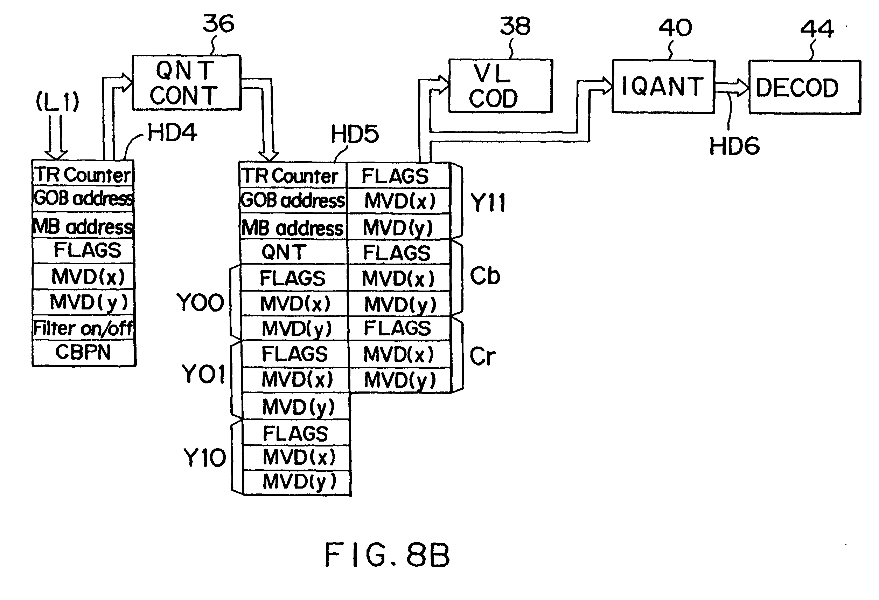

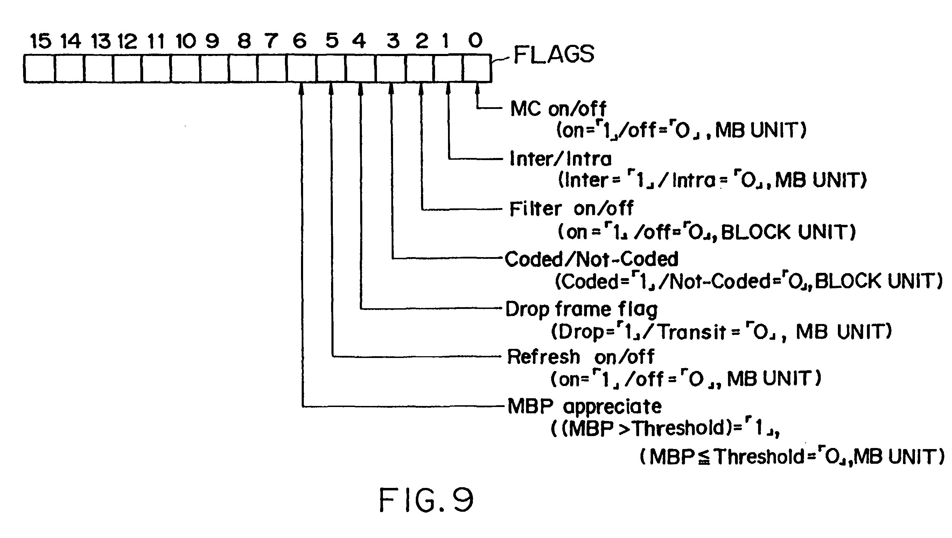

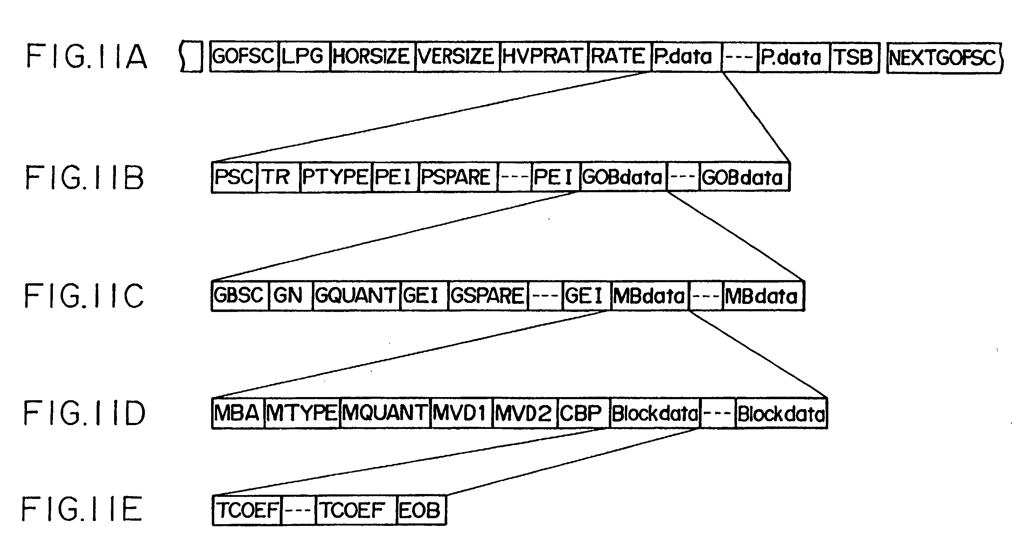

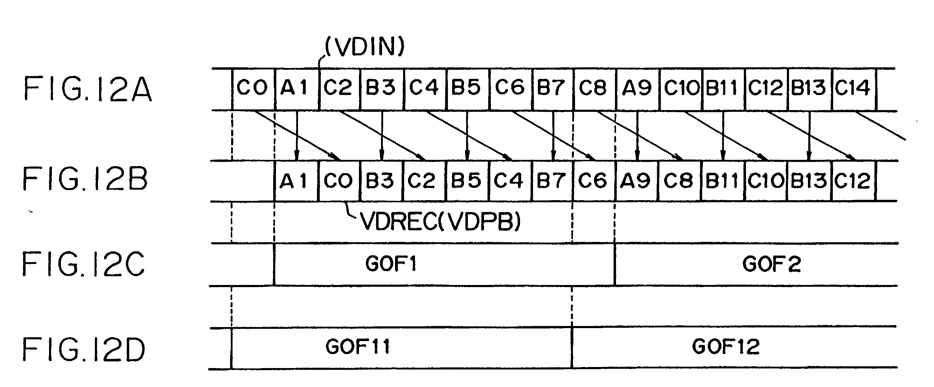

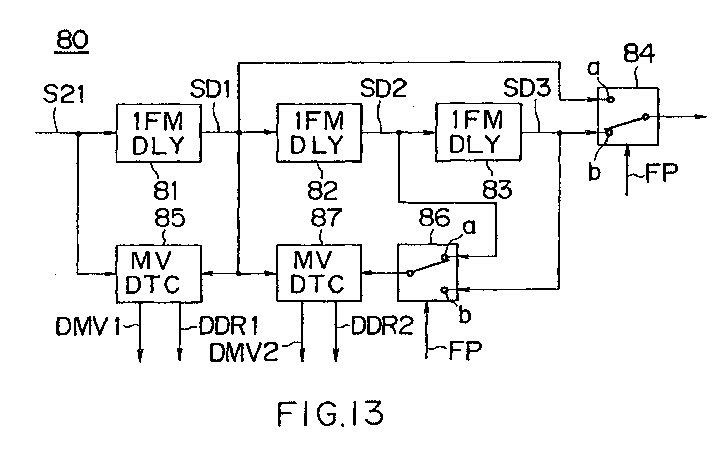

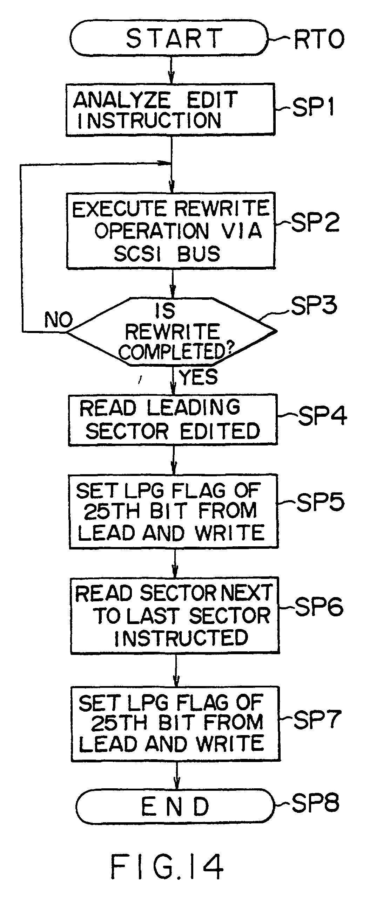

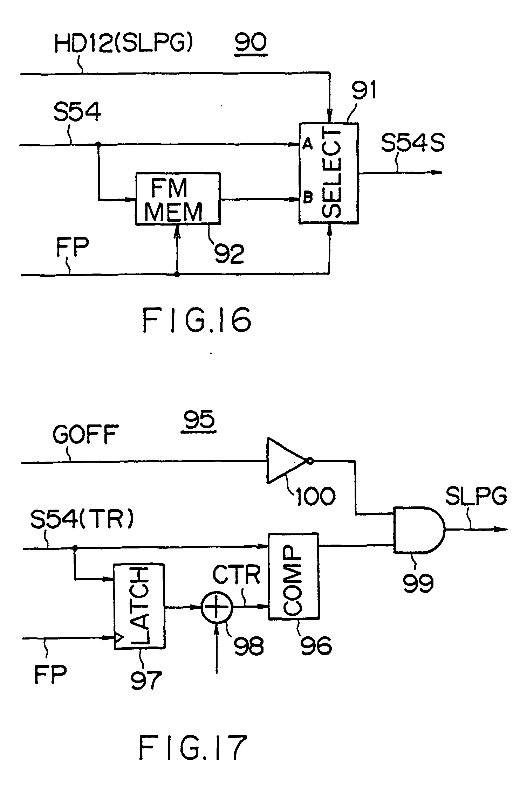

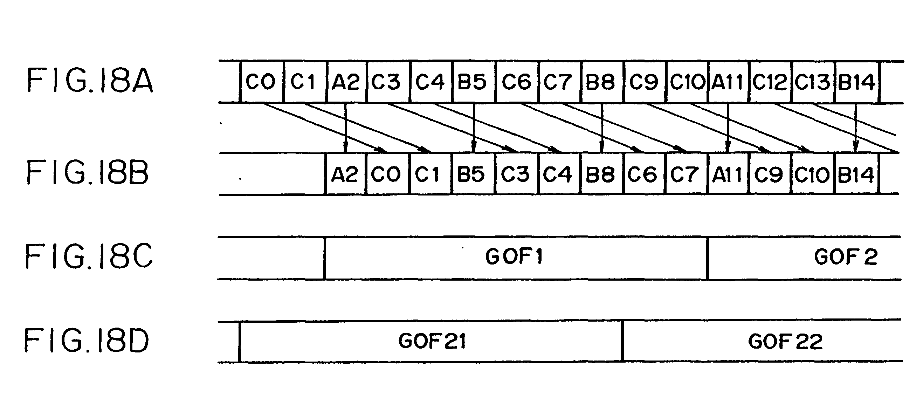

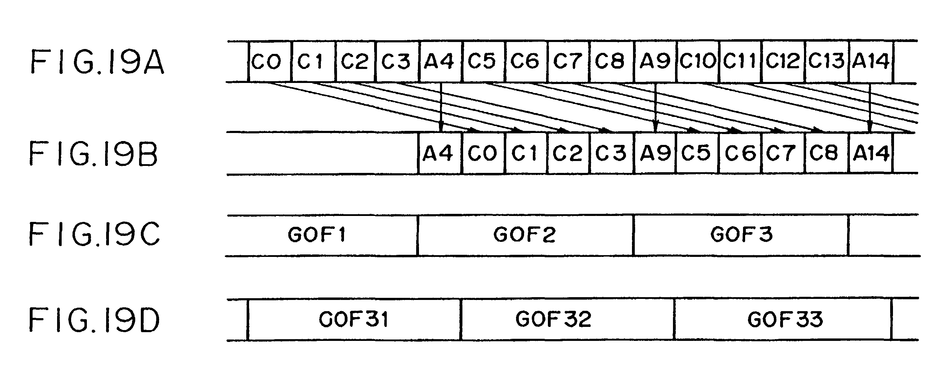

An embodiment in which the present invention is applied to a coded motion picture data recording/reproducing system will now be described in detail with reference to the drawings.
(1) The general configuration of the motion picture coding/decoding system.

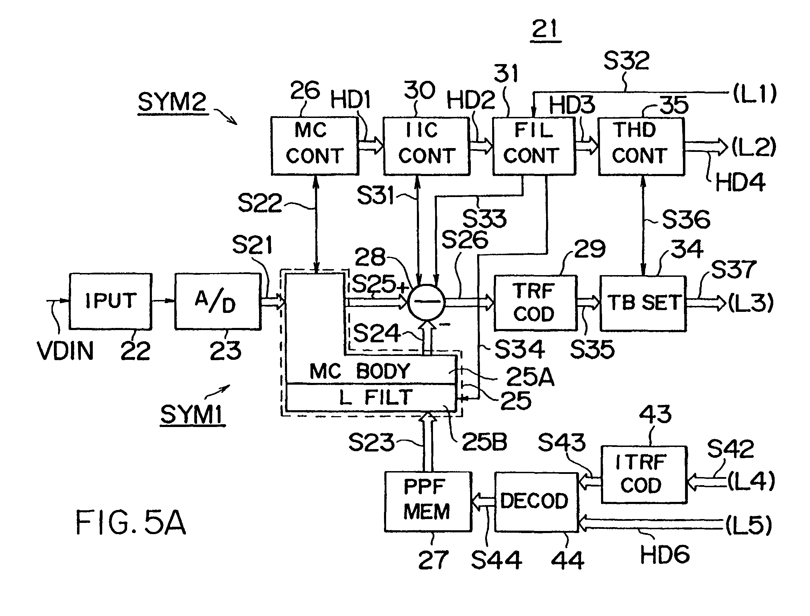

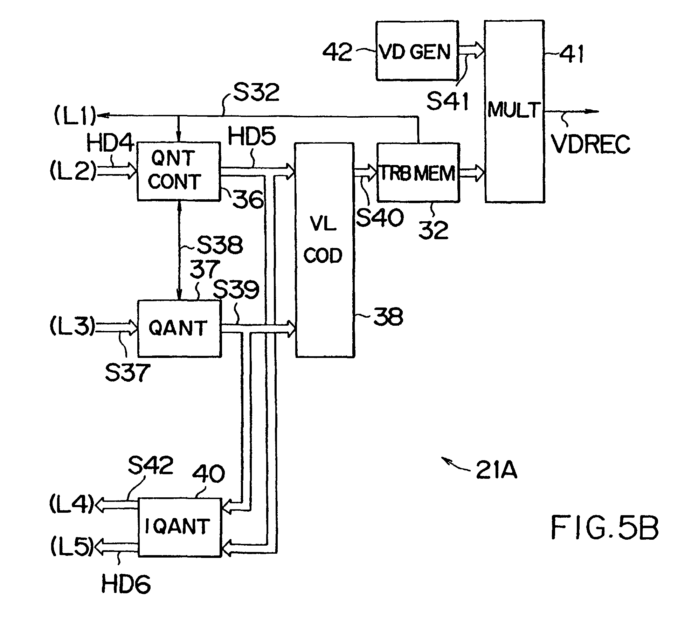

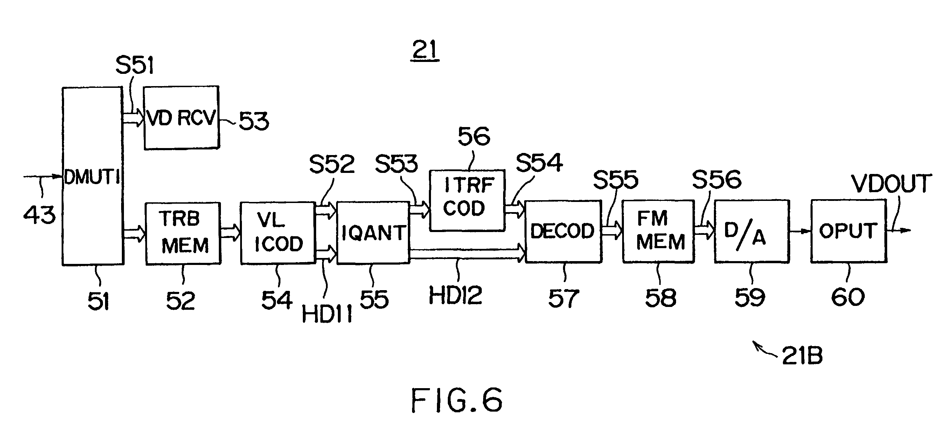

   In Figures 5A, 5B and 6, a motion picture coding/decoding system 21 comprises a motion picture coding system 21A and a motion picture decoding system 21B. The motion picture coding system 21A preprocesses an input video signal VDIN in an input circuit unit 22 and then supplies input image data S21, which is pixel data of 16 by 16 pixels, that is, pixel data of a macro block MB, from an analogue/digital conversion circuit 23 to a pixel data processing system SYM1. At the timing of processing the pixel data in the unit of the macro block MB in each processing step of the pixel data processing system SYM1, processing information data corresponding to the data to be processed are sequentially transmitted through a header data processing system SYM2. Thus, the pixel data and the header data are parallel processed in the pixel data processing system SYM1 and the header data processing system SYM2, respectively.
   In this embodiment, macro block data which are sequentially sent as the input image data S21 are extracted from frame image data FRM according to a technique shown in Figure 7.
   Firstly, in a case where the input video signals VDIN have a picture size (176 x 144 pixels) of QCIF, frame image data FRM of a frame is separated into 1 (horizontal) x 3 (vertical) block groups GOB. Each block group GOB contains 11 (horizontal) x 3 (vertical) of macro blocks MB. Each macro block MB contains 16 x 16 pixels of luminance signal data Y00 to Y11 (each consisting of 8 x 8 pixels of luminance signal data) and chrominance signal data Cb and Cr which are chrominance signal data corresponding to all the pixel data of the luminance signal data Y00 to Y11.
   Secondly, in a case where the input video signals VDIN have a picture size (252 x 288 pixels) of QCIF, frame image data FRM of a frame is separated into 2 (horizontal) x 6 (vertical) block groups GOB. Each block group GOB contains 11 (horizontal) x 3 (vertical) macro blocks MB. Each macro block MB contains 16 x 16 pixels of luminance signals data Y00 to Y11 (each consisting of 8 x 8 pixels of luminance signal data) and chrominance signal data Cb and Cr which are chrominance signal data corresponding to all the pixel data of the luminance signal data Y00 to Y11.
   Thus, the input image data S21 which are sent for each macro block MB are fed to a motion compensation circuit 25. The motion compensation circuit 25 compares the input image data S21 and predictive previous frame data S23 from a predictive previous frame memory 27 in response to a motion detection control signal S22 fed from a motion compensation control unit 26, which is provided in the header data processing system SYM2, and the motion compensation circuit 25 thereby detects motion vector data MVD(x) and MVD(y), which are supplied as first header data HD1 (Figure 4) to the motion compensation control unit 26. Furthermore, the motion compensation circuit 25 forms predictive current frame data S25 by motion compensating the predictive previous frame data S23 by the motion vector data MVD(x) and MVD(y) in a motion compensation circuit unit 25A. The predictive current frame data S24 are fed to an image data coding circuit 28, together with current frame data S25 which are the input image data S21 to be processed.
   As shown in Figure 8, the motion compensation control unit 26 identifies each macro block MB, which is sequentially transmitted to each processing step of the pixel data processing system SYM1, by adding the following data as the first header data HD1 for the macro block being currently processed: transmission frame number data "TR Counter" representing the transmission sequence of the frame image data FRM; block group number data "GOB address" representing the block group GOB (Figure 7); and macro block number data "MB address" representing the macro block in the group. Moreover, the motion compensation control unit 26 forms flag data "FLAGS" representing the processing or a processing type of the macro block MB to be processed, the motion vector data "MVD(x)" and "MVD((y)" of the macro block MB, and differential data "E1A-B1" which represent the evaluation.
   As shown in Figure 9, the flag data "FLAGS" can have one word (16 bits) of flags at maximum. A motion compensation control flag "MC on/off" which represents whether or not the macro block MB to be processed should be processed in motion compensation mode is set at the zero bit of the flag data "FLAGS".
   At the bit 1 of the flag data "FLAGS", interframe/intraframe flag Inter/Intra which represents whether the macro block MB to be processed should be in interframe coding mode or in intraframe coding mode is set.
   At the bit 2 of the flag data "FLAGS", a filter flag "Filter on/off" which represents whether or not a loop filter 25B of the motion compensation circuit 25 is used is set.
   At the bit 3 of the flag data "FLAGS", a transmission flag "Coded/Not-coded" which represents whether or not block data Y00 to Cr (Figure 7) contained in the macro block MB to be processed should be sent can be set.
   At the bit 4 of the flag data "FLAGS", a drop flame flag "Drop frame flag" which represents whether or not the macro block MB to be processed is frame dropped can be set.
   At the bit 5 of the flag data "FLAGS", a forced refreshing flag "Refresh on/off" which represents whether or not the macro block MB to be processed is forcibly refreshed can be set.
   At the bit 6 of the flag data "FLAGS", a macro block power appreciation flag "MBP appreciate" may be set.
   The differential data " A-B " represent a minimum value of the differences between the macro block data A to be processed of the current flame data S25 and macro block data B compensated by detection motion vectors of the predictive previous frame data S23, and enables appreciation of detected motion vectors.
   In the intraframe coding mode, the image data coding circuit 28 supplies the current flame data S25, which is provided from the motion compensation circuit 25, as difference data S26 to a transform coding circuit 29 without any change. On the other hand, in the interframe coding mode the difference data S26 which are the difference between the pixel data of the current flame data S25 and the pixel data of the predictive current frame data S24 are fed to the transform coding circuit 29.
   In the header data processing system SYM2, and interframe/intraframe coding control unit 30 is provided to correspond to the image data coding circuit 28. According to the first header data HD1, fed from the motion compensation control unit 26, and the operation data S31, supplied from the image data coding circuit 28, the interframe/intraframe coding control unit 30 operates on data necessary for obtaining the interframe/intraframe flag "Inter/Intra" and the filter flag "Filter on/off" (Figure 9) and sends the resulting data as second header data HD2 to a filter control unit 31. The interframe/intraframe flag "Inter/Intra" is to indicate the coding mode of the image data coding circuit 28, whereas the filter flag "Filter on/off" is to control the operation of a loop filter 25B of the motion compensation circuit 25.
   As shown in the Figure 8, the second header data HD2 take over the data which constitutes the first header data HD1; the transmission frame number data "TR Counter" to the differential data " A-B ". Furthermore, in the interframe/intraframe coding control unit 30, power data necessary to form interframe/intraframe coding mode switching signal S33 and filter on/off signal S34 are added to the second header data HD2, the power data " (A)²(L)" and "(A)²(H)", "(A-B)²(L)" and " (A-B)²(H)", "(A-FB)²(L)" and " (A-FB)²(H)", and " (A)".
   The power data "(A)²(L)" and " (A)²(H)" represent the lower bit and the upper bit of the sum of the squares of macro block pixel data A of the current flame data S25, respectively. The power data " (A-B)²(L)" and " (A-B²(H)" represent the lower bit and the upper bit of the sum of the squares of the difference A-B of the macro block pixel data A of the current frame data S25 and macro block pixel data B of the predictive current frame data S24, which is formed without passing through the loop filter 25B, respectively. The power data "(A-FB)²(L)" and " (A-FB)²(H)" represents the lower bit and the upper bit of the sum of the squares of the difference A-FB between the macro block pixel data A of the current frame data S25 and macro block pixel data FB of the predictive current frame data S24, which is formed through the loop filter 25B, respectively. The " (A)" represents the sum of the macro block pixel data A of the current frame data S25. To evaluate the magnitude of each data to be processed, the amount of the data is expressed in power value (each sum of the squares is obtained as a value irrespective of sign).
   According to the second header data HD2 fed from the interframe/intraframe coding control unit 30 and residual amount data S32 fed from a transmission buffer memory 32, the filter control unit 31 supplies an interframe/intraframe coding mode switching signal S33 to the image data coding circuit 28 and a filter on/off signal S34 to the loop filter 25B, and furthermore the filter control unit 31 adds the filter flag "Filter on/off", representing the contents of the filter on/off signal S34, to the second header data HD2 and supplies the resulting data as third header data HD3 to a threshold control unit 35.
   Here, the filter control unit 31 firstly controls the image data coding circuit 28 to the intraframe coding mode when transmission data interframe coded becomes larger in amount than the transmission data intraframe coded.
   Secondly, according to the filter on/off signal S34 the filter control unit 31 controls the loop filter 25B not to perform the filtering operation when during the processing in the interframe coding mode, the predictive current frame data S24 which has not been processed in the loop filter 25B is smaller in differential value than the predictive current frame data S24 which has been processed there.
   Thirdly, the filter control unit 31 switches the image data coding circuit 28 to the intraframe coding mode according to the interframe/intraframe coding mode switching signal S33 in the forced refreshing mode.
   Fourthly, the filter control unit 31 detects a state in which the transmission buffer memory 32 is liable to overflow data according to the residual amount data S32 provided from the transmission buffer memory 32, and thereby supplies to the threshold control unit 35 the third header data HD3 which contains a flag to command to execute a frame dropping procedure.
   Thus, the image data coding circuit 28 supplies to the transform coding circuit 29 difference data S26 which has been encoded in such a mode that the difference between the current frame data S25 and the predictive current frame data S24 becomes a minimum. As shown in Figure 8, the third header data HD3 takes over transmission frame number data "TR Counter" to motion vector data "MVD(x)" and "MVD(y)" from the second header data HD2, and the filter control unit 31 adds 6 bits of filter flag "Filter on/off" which correspond to the block data Y00 to Cr to the third header data HD3.
   The transform coding circuit 29 is a discrete cosine transform circuit and sends to a transmission block setting circuit 34 transform code data S35 which is obtained by zigzag scanning discrete cosine transformed coefficients per 6 blocks Y00, Y01, Y10, Y11, Cb and Cr.
   The transmission block setting circuit 34 computes the sum of squares of coefficient data of n from the leading data about each of the six block data Y00 to Cr (Figure 7), and supplies the result of the operation as power detection data S36 to the threshold control unit 35.
   In this event, the threshold control unit 35 compares the power detection data S36 of each of the block data Y00 to Cr with a predetermined threshold and thereby forms 6 bits of transmission permitted/not-permitted data "CBPN" which represents that the block data are not permitted to be transmitted when the power detection data S36 are smaller than the threshold, whereas the block data are permitted to do so when the power detection data S36 are larger than the threshold. These data are added to the third header data HD3 which has been received from the filter control unit 31. The threshold control unit 35 supplies the resulting data to a quantization control unit 36 as fourth header data HD4 and controls the transmission block setting circuit 34 to send corresponding block data Y00 to Cr as transmission block patterning data S37 to a quantizer 37.
   Here, as shown in Figure 8 the fourth header data HD4 takes over the transmission frame number data "TR Counter" to filter flag "Filter on/off" of the third header data HD3 without any change, and 6 bits of the transmission permitted/not-permitted flag "CBPN", which has been generated at the threshold control unit 35 to correspond to the blocks Y00 to Cr, is added to the fourth header data HD4.
   On the basis of the fourth header data HD4 supplied from the threshold control unit 35 and the residual amount data S32 sent from the transmission buffer memory 32, the quantization control unit 36 determines a quantization step size, and thereby sends a quantization step size control signal S38 to the quantizer 37, thereby causing the quantizer 37 to perform the quantization procedure at the quantization step size which matches the data contained in the macro block MB. Consequently, quantized image data S39 which has been obtained at the output terminal of the quantizer 37 is fed to a variable length coding circuit 38.
   In addition to this, is dependence on the fourth header data HD4, the quantization control unit 36, as shown in Figure 8, forms as header data HD5 data in which the flag data "FLAGS" and the motion vector data "MVD(x)" and MVD(y)" are separated and arranged in series to correspond to each of the block data Y00 to Cr (Figure 7), and the quantization control unit 36 supplies header data HD5 to the variable length coding circuit 38 and an inverse quantizer 40.
   As shown in Figure 8, the header data HD5 takes over the transmission frame number data "TR Counter" to the macro block "MB address" in the fourth header data HD4 without any change, and the quantization control unit 36 adds quantization size data "QNT" and flag data "FLAGS" for the block data Y00 to Cr, and motion vector data "MVD(x)" and "MVD(y)", to the header data HD5.
   The variable length coding circuit 38 performs variable length coding operations on the header data HD5 and the quantized image data S39 to form transmission image data S40, which are supplied to the transmission buffer memory 32.
   In variable length coding the block data Y00 to Cr, the variable length coding circuit 38 performs processing to neglect the block data without sending them as transmission image data S40, when "frame dropping" or "transmission not permitted" is instructed by the corresponding flag data "FLAGS".
   The transmission buffer memory 32 stores the transmission image data S40, which are read at a predetermined transmission rate and are composed with transmission voice data S41, sent from a voice data generator 42, in a multiplexer 41 to produce and send coded motion picture data VDREC to the CD-MO unit.
   The inverse quantizer 40 inversely quantizes the quantized image data S39, sent from the quantizer 37, according to the header data HD5, and then feeds the inverse quantization data S42 to an inverse transform coding circuit 43 for transforming to inverse transform coded data S43, which are then fed to a decoder circuit 44. Thus, coded differential data S44 which represents image information sent as the transmission image data S40 is supplied to the predictive previous frame memory 27.
   In this event, the predictive previous frame memory 27 performs correction of the predictive previous frame data stored using the coded differential data S44 to store as new predictive previous frame data.
   Thus, in the motion picture coding system 21A of the configuration in Figures 5A and 5B, the pixel data processing system SYM1 pipelines pixel data in the unit of a macro block according to the header information fed from the header data processing system SYM2. Synchronously with this, header data are transferred in the header data processing system SYM2, and thereby the pixel data are appropriate processed by performing addition or deletion of the header data in each step of the header data processing system SYM2 according to needs.
   As shown in Figure 6, in the motion picture decoding system 21B the coded motion picture data VDPB reproduced in the CD-MO unit is accepted in a transmission buffer memory 52 through a demultiplexer 51 while transmission voice data S51 are received in a voice data receiving unit 53.
   The pixel data received in the transmission buffer memory 52 are separated into received image data S52 and header data HD11 in a variable length inverse transform circuit 54. The received image data S52 is inverse quantized to form inverse quantized data S53 in an inverse quantizer 55, and is then inverse transformed to inverse transform coded data S54 by discrete inverse transformation in an inverse transform coding circuit 56.
   The inverse transform coded data S54 is fed to a decoder circuit 67 together with header data HD12 formed in the inverse quantizer 55, and is then stored as coded differential data S55 in a frame memory 58.
   Thus, the pixel data transmitted are decoded in the frame memory 58 on the basis of the coded differential data S55. In a digital/analogue conversion circuit 59, the decoded image data S56 are converted to analogue signals, which are then outputted as output video signals VDOUT through an output circuit unit 60.
(2) The order of recording the coded motion picture data.

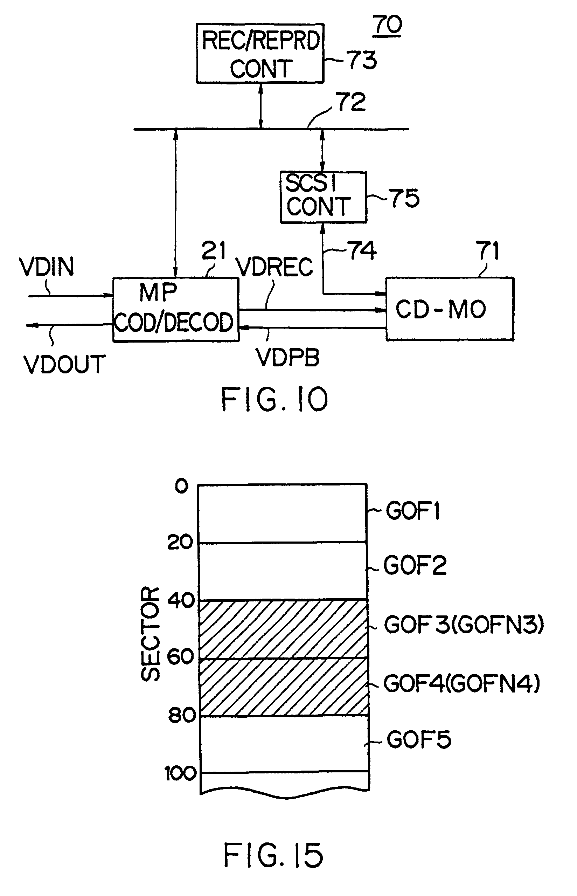

   Figure 10 shows a coded motion picture data recording/reproducing system 70 to which the coded motion picture data recording method according to the present invention is applied.
   In the recording/reproducing system 70, input video signals VDIN are high efficiency coded through the coding/encoding system 21, and the resulting coded motion picture data VDREC are inputted to a CD-MO unit 71 where it is recorded on a CD-MO disc (not shown).
   Conversely, reproduced signals obtained from the CD-MO unit 71 are inputted as coded motion picture data VDPB to the motion picture coding/encoding system 21, and output video signals VDOUT which can be obtained by decoding the resulting coded motion picture data VDPB are sent out. In the recording/reproducing system 70, the coding/encoding system 21 is connected to a recording/reproducing controlling circuit 73 which includes a central processing unit (CPU) via a bus 72. The coding of the input video signals VDIN and decoding of the coded motion picture data VDPB are controlled by the recording/reproducing controlling circuit 73.
   In addition to this, the CD-MO unit 71 has a SCSI (small computer system interface) incorporated in it, and is connected to the recording/reproducing controlling circuit 73 through a SCSI bus 74, a SCSI control circuit 75 and the bus 72. This enables the recording and reproducing operations to be controlled by the recording/reproducing controlling circuit 73.
   The coded motion picture data VDREC which is supplied from the motion picture coding/encoding system 21 are inputted to the CD-MO unit 71 in a format which has a layer structure as shown in Figure 7, and the coded motion picture data VDPB are inputted from the CD-MO unit 71 to the motion picture coding/encoding system 21 in the same format.
   More specifically, in the coded motion picture data VDREC and the coded motion picture data VDPB, data which correspond to 8 frames of input video signals VDIN constitute a group of frames GOF as a frame group layer, and each group of frames GOF consists of: a frame group start code (GOFSC) representing the start of the group of frames; a link flag (LPG) representing a continuous relationship to the immediately previous GOF; data which represent horizontal and vertical sizes, the ratio of the number of horizontal and vertical pixels, and the like of the frames to be sent (HORSIZE, VERSIZE, HVPRAT); data (RATE) representing the rate of the transmission frames; data (P.data) of the picture layer which are picture data of one frame for each of 8 frames; and a stuffing bit (TSB) (Figure 11A).
   The data of the picture layer (P.data) of one frame consists of a frame start code (PSC) representing the start of the frame, the frame number (TR), data (PEI, PSPARE) representing extension information, and one frame of data (GOB data) of the block group layer which includes picture data for a block unit (Figure 11B). One block group of data (GOB data) of the block group layer is made up of a block group start code (GBSC) representing the start of the one block group, address data (GN) of the block group, data (GQUANT) relating to requantization step size for the block group, data (GEI and GSPARE) representing extension information, and one block group of data of the macro block layer (MB data) (Figure 11C).
   One macro block of data (MB data) of the macro block layer consists of data representing the address of the macro block (MBA), data representing the type of the macro block (MTYPE), data of the requantization step size of the macro block (MQUANT), data of the motion vectors in the macro block (MVD1, MVD2), data of the block pattern in the macro block (CBP), and data of the block layer for one macro block (Block data) (Figure 11D).
   One block of data of the block layer (Block data) consists of coefficient data of a predetermined number (TCOEF) and data representing the end of the block layer (EOB) (Figure 11E).
   In the motion picture coding system 21A of this embodiment, the coded motion picture data VDREC is formed in the order of the frame recording, as shown in Figure 12B, to correspond to the decoding in the motion picture decoding system 21B in place of the usual frame recording order according to the input video signals VDIN of Figure 12A, and is supplied to and recorded by the CD-MO unit 71. The coded motion picture data VDPB reproduced by the CD-MO unit 71 are inputted to the motion picture decoding system 21B in this frame recording order.
   In this way, when the interpolated frame C2, for example, is to be decoded, the intraframe A1 and the predictive frame B3 which are necessary for decoding have been already inputted, and when the interpolated frame C4, for example, is to be decoded, the predictive frames B3 an B5 which are necessary for decoding have been already inputted. Thus, the motion picture encoding system 21B is capable of executing the decoding of the interpolated frame C2 or C4 at once.
   In the motion picture coding system 21A of this embodiment, a frame order reordering circuit 80 incorporated in the motion compensation circuit 25 is used, as shown in Figure 13, to reorder the order of the frame recording based on the input video signals VDIN to the order of the frame recording according to the decoding operation as previously described.
   The frame order reordering circuit 80 includes first to third one frame delay circuits 81, 82 and 83, and is capable of executing detection of motion vectors as well as the reordering of the sequence of the frames.
   More specifically, the input video signals VDIN undergo predetermined processing in the input circuit unit 22 and the analogue digital conversion circuit 23, and the resulting input image data S21 are inputted to the first one frame delay circuit 81.
   First delayed data SD1 from the first one frame delay circuit 81 are inputted to the second one frame delay circuit 82 as well as to the first input terminal a of a first frame selection circuit 84.
   The delayed data SD2 from the second one frame delay circuit 82 are passed to the third one frame delay circuit 83, where they are delayed one frame and are inputted as the delayed data SD3 to the second input terminal b of the first frame selection circuit 84.
   This enables the frame order reordering circuit 80 sequentially to input image data S21 at the timing of each frame, and selectively to control the first and second input terminals a and b of the first frame selection circuit 84 at the timing of the frame pulse FP which is synchronized with the input image data S21, so that the reordering of the frame sequence is accomplished.
   The input image data S21 and the first delay data SD1 are inputted to a first motion vector detection circuit 85, and the resulting motion vector data DMV1 and differential data DDR1 between the input image data S21 and the first delay data SD1 are supplied to the motion compensation unit 26.
   Furthermore, the second and the third delay data SD2 and SD3 are inputted to first and second input terminals a and b of a second frame selection circuit 86, and either one is selected at the timing of the frame pulse FP and is then inputted to a second motion vector detection circuit 87.
   In addition to this, first delay data SD1 are inputted to the second motion vector detection circuit 87, and the resulting motion vector data DMV2 and differential data DDR2 between the first delay data SD1 and the delay data SD2 or delay data SD3 are supplied to the motion compensation unit 26.
   In the construction previously described, frames are reordered in the order to correspond to the decoding operation in place of the frame order on the basis of the input video signals VDIN when the coded motion picture data VDREC are obtained by high efficiency coding the input video signals VDIN. This realizes the coded motion picture data transmission method which is capable of simplifying and making efficient the control and the circuit configuration of the decoding system.
(3) Method of editing coded motion picture data.
   The recording/reproducing controlling unit 73 of the coded motion picture recording/reproducing system 70 executes an edit routine RT) as shown in Figure 14 in response to an edit instruction externally inputted, and thereby rewrites the coded motion picture data VDREC in the unit of one group of frames, thus performing the edit operation. As shown in Figure 15, the coded motion picture data VDREC are recorded in one group of frames per 20 sectors of a CD-MO disc.
   In the input video signals VDIN, the intraframe, interpolated frames and predictive frames C0, A1, C2, B3, C4, B5, C6 and B7, which follow the interpolated frame C0 immediately prior to the intraframe A1, are according to this example transmitted as one group of frames GOF11, GOF12, .... instead of the usual method which makes one group of frames GOF1, GOF2, .... of 8 frames, the intraframe, interpolated frames and predictive frames, which follow the intraframe, A1, C2, B3, C4, B5, C7, B7, and C8 as shown in Figure 12C.
   In this way, an error such that a frame in one group of frames GOF11, GOF12, .... is contained in the other group of frames GOF11, GOF12, .... is prevented.
   In practice, the recording/reproducing controlling circuit 73 enters the edit routine RT0 shown in Figure 14, and analyzes the edit instruction in the step SP1.
   When it is instructed to rewrite 40 sectors of the third and the fourth group of frames GOF3 and GOF4 by new coded motion picture data VDREC, the recording/reproducing controlling circuit 73 proceeds to the next step SP2.
   In this step SP2, the recording/reproducing controlling circuit 73 sends out a control command to the SCSI control circuit 75 to respond to the edit instruction, according to which rewrite control of the CD-MO disc is executed by way of the SCSI bus 74.
   In this event, by the control of the recording/reproducing controlling circuit 73 through the bus 72, input video signals VDIN of two new groups of frames GOF3N and GOF4N are inputted as coded motion picture data VDREC to the CD-MO unit 71 via the motion picture coding/encoding system 21.
   Subsequently, the recording/reproducing controlling circuit 73 executes the next step SP3, in which is judges whether or not the rewrite operation is finished. When a negative result is obtained in this step, the recording/reproducing controlling circuit 73 returns to the step SP2, where it continues the control of the rewrite operation. When an affirmative result is eventually obtained, it goes to the step SP4.
   In the step SP4, the recording/reproducing controlling circuit 73 reads the leading sector of the edited CD-MO disc (the fortieth sector in this example).
   In the next step SP5, the recording/reproducing controlling circuit 73 sets as the edit flag the link flag (LPG) of the frame group layer which exists in the 25th bit from the beginning of the sector, and writes this at the position on the CD-MO disc of the sector read.
   Subsequently, in the step SP6 the recording/reproducing controlling circuit 73 reads the sector (the 80th sector in this embodiment) following the last sector of the CD-MO disc edited.
   In the next step SP7, as previously described the recording/reproducing controlling circuit 73 sets as the edit flag the link flag (LPG) of the frame group layer which exists in the 25th bit from the beginning of the sector, and writes this at the position on the CD-MO disc of the sector read. In the next step SP8, the edit routine RT0 is completed.
   The coded motion picture data CDREC which have been edited and recorded on the CD-MO disc practically in such a manner is read by the control of the recording/reproducing controlling circuit 73, and the resulting coded motion picture data VDPB which is obtained as reproduction signals is inputted to the motion picture coding/encoding system 21.
   In the motion picture decoding system 21B of this example by using a frame sequence reverse reordering circuit 90, as illustrated in Figure 16, reverse reordering which reorders the frame sequence according to the decoding operation to the frame order based on the input video signals VDIN is carried out. The frame sequence reverse reordering circuit 90 is included in the decoder circuit 57. Concurrently, edit reproduction is executed with reference to the edit flag set in the link flag (LPG of the frame group layer.
   More specifically, the inverse transform coded data S54 sent from the inverse transform coding circuit 56 is directly inputted to a first input terminal A of a selector circuit 91 of the decoder circuit 57, and is also inputted to a second input B through a frame memory 92 with a delay of 2 frames.
   The selector circuit 91 and the frame memory 92 are operated at the timing of the frame pulse FP, and thereby the reverse reordering from the frame order according to the decoding operation (Figure 12B) to the frame order based on the input video signals VDIN (Figure 12A) is executed.
   Edit flag signals SLPG which correspond to the edit flag set in the link flag (LPG) of the header data HD12 formed in the inverse quantization circuit 55 are inputted to the selector circuit 91, and only when it is represented that the edit flag signals SLPG is set, the selection operation is discontinued and a frame which arrives after this is outputted without any change.
   This prevents frame data in the old groups of frames GOF1, GOF2, GOF5, .... being mixed into frame data in the new groups of edited frames GOFN3 and GOFN4, for example, causing disturbance to be produced in the reproduced image.
   In a case where the edit flag is set in the group of frames GOF12 shown in Figure 12D, the intraframe A9 is outputted twice in place of the 8th interpolated frame C8.
   In performing an edit operation on recorded, coded motion picture data by the constructive previous described for each group of frames, the edit flag is set to the link flags (LPG) of the groups of frames edited and the groups of frames immediately after the edit operations, and interpolation is executed on interpolated frames with reference to the edit flags in reproduction. Thus, it is possible to realize the coded motion picture recording method which is capable of freely and well performing edit operations.
(4) Other examples and aspects of the present invention
(4-1) In the example previously described, it is stated that in performing edit operations on recorded, coded motion picture data for each group of frames, the edit flag is set to the link flags (LPG) of the groups of frames edited and the groups of frames immediately after the edit operations. However, in a case where the recording/reproducing controlling circuit 73 stores the edited groups of frames, edit operations can be performed in an excellent manner merely by setting the edit flag to the link flags (LPG) of the groups of frames immediately after edit operations.
(4-2) In the example above described, it is mentioned that in performing edit operations on recorded, coded motion picture data for each group of frames, the edit flag is set to the link flags (LPG) of the groups of frames edited and the groups of frames immediately after the edit operations. Alternatively, in the motion picture coding system 21A, consecutive numbers which start from a random number generated in the recording/reproducing controlling circuit 73 may be added to frame numbers (TR) of the picture layer, and signals similar to the edit flag signals SLPG previously described may be generated at the timing of detection of discontinuity in the frame number (TR) in edit reproducing. In this manner a similar effect to that of the example above described can be achieved.
   In this connection, the discontinuity in the frame number (TR) is detected in a discontinuity detection circuit 95 shown in Figure 17.
   More specifically, the discontinuity detection circuit 95 is provided in the frame sequence reverse reordering circuit 90, and the frame numbers (TR) of the picture layer contained in the inverse transform coded data S54 are inputted to a comparison circuit 96 and a latch circuit 97.
   The latch circuit 97 performs a latch operation at the timing of the frame pulse FP, and consequently, a frame number (TR) is inputted to an adder circuit 98 with a delay of one frame for adding "1", and is inputted to the comparison circuit 96 as a comparison frame number CTR.
   The comparison circuit 96 compares the frame number (TR) with the comparison frame number CTR, and generates a disconsistency detection signal at logic level "H" when the values are not consistent with each other. The comparison circuit 96 sends this signal to an AND circuit 99.
   In addition to this, the leading frame group signal GOFF having a logic level "H" is inverted through an inversion circuit 100 and is then inputted to the AND circuit 99. Thus, the inconsistency detection signal is controlled at a logic level "L" in reproduction of the leading frame group, and in the other operations, edit flag signals SLPG with a logic level corresponding to inconsistency detection signal are outputted to the selector circuit 91 of the frame sequency reverse reordering circuit 90.
(4-3) In the example previously described, edited groups of frames are discriminated using edit flags and frame numbers (TR) in executing edit operations for each group of frames. However, according to the present invention the relationship of each frame in each group of frames may be made complete by interpolating each interpolated frame C of each frame group, using only the intraframe A and the predictive frame B in the frame group. This enables a coded motion picture data recording method to be realized which is capable of executing edit operations easily and freely even if degradation in picture quality is produced to some extent.
(4-4) In the above embodiment, it is stated that the frame sequence of the coded motion picture data is reordered. In the frame sequence, intraframes A, predicted frames B and interpolated frames C are arranged as shown in Figure 12A. The frame arrangement of the coded motion picture data is not limited to this. Also, in cases illustrated in Figures 18A and 19A, similar effects to the foregoing embodiment can be achieved by sending the frames in a reordered frame sequence which corresponds to the processing sequence of the decoding side as shown in Figures 18B and 19B.
   In these cases, arrangements of groups of frames GOF21, GOF22, .... in Figure 18D, and GOF31, GOF32, .... in Figure 19D, may be adopted in place of the arrangements of groups of frames GOF1, GOF", .... shown in Figures 18C and 19C, and thereby similar effects on edit operations to those of the foregoing embodiment can be achieved.
(4-5) In the above embodiment, a case is described in which video signals are high efficiency coded and then recorded on the CD-MO disc, but the recording medium is not limited to this. The present invention may be applied to various other recording media, such as an optical disc, magnetic disc and magnetic tape.
(4-6) In the embodiment above, it is described that video signals are high efficiency coded and then recorded on the CD-MO disc, but the present invention is not limited to this.

## Claims

1. A method of coding motion picture data, in which:
video signals (VDIN) are predictively coded and are then quantized to provide coded motion picture data (VDREC); and
said coded motion picture data (VDREC) are transmitted as groups of frames (GOF), each group of frames (GOF) including a predetermined number of said predictively coded frames and a frame group start code (GOFSC); wherein
said video signals (VDIN) for respective frames within a group of frames are predictively coded by using one of an intraframe coding in which a current frame is coded as an intracoded frame, a first interframe coding in which the current frame is predicted as a predictive coded frame from a reference frame preceding said current frame in a display order and a second interframe coding in which the current frame is predicted as an interpolated frame from reference frames preceding and following said current frame in said display order; and
said interpolated frames of said group of frames (GOF) are interpolated by using only said intracoded frame or said predictive coded frame in said group of frames (GOF) so that a relationship of each frame in said group of frames (GOF) is complete.

## Patentansprüche

1. Verfahren zum Codieren von Bewegtbilddaten, bei dem:
Videosignale (VDIN) vorhersage-codiert und dann quantisiert werden, um codierte Bewegtbilddaten (VDREC) bereitzustellen; und
die codierten Bewegtbilddaten (VDREC) als Gruppen von Vollbildern (GOF) übertragen werden, wobei jede Gruppe von Vollbildern (GOF) eine vorher-festgelegte Anzahl der vorhersage-codierten Vollbilder und einen Vollbildgruppen-Startcode (GOFSC) umfaßt; wobei
die Videosignale (VDIN) für entsprechende Vollbilder innerhalb einer Gruppe von Vollbildern vorhersage-codiert werden, wobei eine Intravollbildcodierung verwendet wird, bei der ein laufendes Vollbild als intracodiertes Vollbild codiert wird, eine erste Intervollbildcodierung, bei der das laufende Vollbild als ein vorhersage-codiertes Vollbild von einem Referenz-Vollbild, welches dem laufenden Vollbild in einer Anzeigereihenfolge vorhergeht, vorhergesagt wird, oder eine zweite Intervollbildcodierung, bei der das laufende Vollbild als ein interpoliertes Vollbild von Referenzvollbildern vorhergesagt wird, die dem laufenden Vollbild in der Anzeigereihenfolge vorhergehen und folgen; und
die interpolierten Vollbilder dieser Gruppen von Vollbildern (GOF) interpoliert werden, wobei nur das intracodierte Vollbild oder das vorhersage-codierte Vollbild in der Gruppe von Vollbildern (GOF) verwendet wird, so daß eine Beziehung jedes Vollbilds in der Gruppe von Vollbildern (GOF) vollständig ist.

## Revendications

1. Procédé de codage de données d'image mobile, dans lequel :
des signaux vidéo (VDIN) sont codés de façon prédictive et sont ensuite quantifiés pour produire des données d'image mobile codées (VDREC) ; et
lesdites données d'image mobile codées (VDREC) sont transmises en tant que groupes de trames (GOF), chaque groupe de trames (GOF) incluant un nombre prédéterminé desdites trames codées de façon prédictive et un code de départ de groupe de trames (GOFSC) ; dans lequel :
lesdits signaux vidéo (VDIN) pour des trames respectives dans un groupe de trames sont codés de façon prédictive en utilisant un codage pris parmi un codage intra-trame dans lequel une trame courante est codée en tant que trame intra-codée, un premier codage inter-trame dans lequel la trame courante est prédite en tant que trame codée de façon prédictive à partir d'une trame de référence précédant ladite trame courante dans un ordre d'affichage et un second codage inter-trame dans lequel la trame courante est prédite en tant que trame interpolée à partir de trames de référence précédant et suivant ladite trame courante dans ledit ordre d'affichage ; et
lesdites trames interpolées dudit groupe de trames (GOF) sont interpolées en utilisant seulement ladite trame intra-codée ou ladite trame codée de façon prédictive dans ledit groupe de trames (GOF) de telle sorte qu'une relation de chaque trame dans ledit groupe de trames (GOF) soit obtenue.
